# EUROPEAN PATENT SPECIFICATION

(11) **EP 2 440 331 B1**
(45) Date of publication and mention of the grant of the patent: **23.10.2024**
(21) Application number: 10728402.8
(22) Date of filing: 10.06.2010
(51) Int. Cl.: B01L 3/14, B01D 71/02, B01D 67/00, B01D 29/01, G01N 1/40, B01D 35/30, B01L 3/00, B01D 63/08

(54) **MICROFILTER CENTRIFUGE TUBE**
MIKROFILTER-ZENTRIFUGENROHR
TUBE À CENTRIFUGER À MICROFILTRE

(30) Priority: 11.06.2009 EP 09162512
(43) Date of publication of application: 18.04.2012
(73) Proprietor: Innosieve Diagnostics B.V., 5251 ZB Vlijmen (NL)
(72) Inventor: KLERKS, Michel Mathijs, NL-5251 ZB Vlijmen (NL)
(74) Representative: V.O.
(86) International application number: PCT/NL2010/050354
(87) International publication number: WO 2010/143954

(56) References cited:
- EP-A1- 0 709 132
- WO-A1-93/23154
- WO-A2-2005/118863
- DE-A1- 3 722 562
- US-A- 4 534 863
- US-A1- 2002 110 495
- US-A1- 2003 038 076
- US-B1- 6 225 131
- US-B1- 6 719 896

## Description

### Field of the Invention

The invention pertains to a centrifuge tube (also denoted "spin tube" or "spin column") comprising a filter holder, and to a filter for use therein. The invention particularly pertains to a microcentrifuge (or "microfuge") tube.

### Background of the Invention

Centrifuge tubes, and the like, have found widespread usage in the collection and purification of various biological materials. Typical centrifuge tubes or centrifuge tips are tapered tubes of various sizes made of glass or plastic. They may vary in capacity from tens of millilitres, to much smaller capacities for use in microcentrifuges used extensively in molecular biology laboratories. The most commonly encountered centrifuge tubes are of about the size and shape of a normal test tube (~ 10 cm long) with capacities from 10 ml to 50 ml. Microcentrifuges typically accommodate microcentrifuge tubes with capacities from 250 µl to 2.0 ml. The latter are generally made of plastic.

Microcentrifuge tubes or microfuge tubes are thus small, cylindrical plastic containers with conical bottoms, typically with an integral snap cap. They are used in molecular biology and biochemistry to store and centrifuge small amounts of liquid. As they are inexpensive and considered disposable, they are used by many chemists and biologists as convenient sample vials in lieu of glass vials; this is particularly useful when there is only a small amount of liquid in the tube or when small amounts of other liquids are being added, because microcentrifugation can be used to collect the drops together at the bottom of the tube after pipetting or mixing. Generally made of polypropylene, they can be used in very low temperature (-80 °C to liquid nitrogen temperatures) or with organic solvents such as chloroform. They come in many different sizes, generally ranging from 250 µL to 2.0 mL. The most common size is 1.5 mL. Disinfection is possible (1 atm, 120 °C, 20 minutes) and is commonly performed in works related to DNA/RNA, where purity of the sample is of utmost importance. Due to their low cost, difficulty in cleaning the plastic surface and to prevent risk of contamination, they are usually discarded after each use.

*Eppendorf tube* has become a genericized trademark for *microfuge tubes* or *microcentrifuge tubes.* Eppendorf is a major manufacturer of this item, but is not the only one.

A known method for isolating nucleic acids from a small amount of starting material includes the use of a centrifuge tube provided with a filter (a spin filter column) that contains a nucleic acid binding material (i.e., a filter). Examples of binding material/filters include silica's like glass powder, silica particles, glass microfibers, diatomaceous earth, etc.

Thus, e.g., WO 98/11989 discloses a filtration system including a filter basket with a filter at one end, which basket is designed to fit inside a microcentrifuge tube. The filter basket accommodates a silica filter disk, which serves to bind nucleic acid materials.

Another reference to the binding of nucleic acids in spin filter columns is US 5,552,325. This discloses a centrifuge tube containing a porous selection means for selectively separating and recovering biological substances from gels, broths, or solutions containing them. The porous selection means preferably is a membrane containing a particulate substance which will selectively bind the biological substances while allowing unbound substances to pass through while being centrifuged.

In these and other methods, it is essential that the biological material (i.e. DNA / RNA) is reversibly bound to the filter and herewith enriched and purified from the other biological materials. As indicated in US 5,552,325, today it is generally not desired to filter biological material in such a way as allowing them not to be bound.

Past technologies in this respect include, e.g., a filtration apparatus and method as disclosed in US 4,832,851. This involves a relatively complex piece of equipment that serves to keep a filter vessel means forcibly immersed when subjected to centrifugal force.

In general the current filter holders for RNA/DNA extraction are directed to bind a certain molecule that is derived from a target organism or substrate after lysing the sample (by adding a chaotropic salt to disrupt molecular structures and cell walls of organisms and reduce tertiary structures dramatically).

The present invention seeks to provide a filter that can be used in a filter holder in a simple centrifuge tube, preferably a standard (micro)centrifuge tube (such as the above-mentioned *Eppendorf* tubes), which allows the concentration of biological material without the need for binding it to the filter. Also, the present invention seeks to provide a method by which one can concentrate one or more microorganisms from a liquid containing them, by centrifuging them when contained in a centrifuge column, and yet retain their viability if desired.

As a further background to the invention, reference is made to a microfiltration technology described, *inter alia*, in WO 02/43937. Herein use is made of a combination of polymeric hollow fibers and ceramic membranes. Other references describing microfilters on the basis of ceramic membranes include WO 95/13860, WO 93/23154, and WO 2005/105276.

Other background references pertain to employing membrane filters, *inter alia* in centrifuge tubes. These references convey either or both of two messages. One such message is that it is largely in discriminative which microporous materials to use. The other message is to use a filter material adapted to specifically bind a substance to be separated.

WO 2005/118863 describes methods for separating one or more analytes present in a fluid sample. The reference broadly refers to a vast variety of microporous materials. Depending on the intended usage, a differently prepared filter will be employed. One of the devices possibly used herein, is a centrifuge tube provided with a filter holder comprising an analysis filter. This device is described for retaining nucleic acids, which has the above-discussed limitations.

US 6,719,896 provides a fluid receptacle for use in centrifugal sample concentration protocols. Herein a membrane filter is used that can be made of a wide variety of materials.

US 2002/110495 describes a device and method for the purification and separation of substances. The device comprises a column module that is packed with a chromatography medium having a special affinity for attracting a given substance. E.g. centrifugal force can be utilized in order to separate the selected substance from the sample.

US 2003/038076 discloses a centrifugal filtration vessel that can be inserted in a small centrifuging tube. The vessel comprises a membrane filter that can be made of a wide variety of materials.

EP 0 709 132 discloses a fluid filtration device comprising a test tube having several chambers, separated one from the other by a filtration membranes. A wide variety of membranes is foreseen.

None of these references discloses a centrifuge tube that is capable of solving the problems that the invention seeks to address. Thus, e.g., none of the references provides a spintube that has a basic structure allowing it to be put to use in a versatile manner, without having to choose (before manufacturing the spintube) which purpose the filter therein will have. Also, none of the references provides a spintube that allows the unhampered direct analysis of a retentate obtained after centrifugation.

In fact, if interested in the retentate, the references generally refer to measures of binding an analyte. If interested in the filtrate, the references generally teach that virtually any filter material will be suitable.

A further background reference is DE 37 22 562. This relates to a ringshaped filter body. The filter body holds a filter disk, and is provided with a score near the filter disk. On one end, the filter body is screwed onto a sample collection vessel, and on the other end it is screwed onto a filtrate vessel.As whole, the resulting assembly of three parts screwed onto each other can be used as a centrifuge tube.

### Summary of the Invention

In order to better address one or more of the foregoing desires, the invention, in one aspect, is a filter holder placed within a centrifuge tube, preferably a microcentrifuge tube, said filter holder containing a lithographically etched ceramic microsieve, said microsieve being placed so as to form a cross-section of the filter holder, wherein the filter holder comprises a score at the retentate side of said microsieve.

The invention also provides a microcentrifuge tube, comprising the aforementioned filter holder, said filter holder placed inside a collection tube.

In yet another aspect, the invention resides in a method for the concentration of one or more micro-organisms from a liquid sample containing them, the method comprising introducing the sample in a centrifuge tube, preferably a microcentrifuge tube, as mentioned above, and subjecting the centrifuge tube to centrifugal force so as to concentrate the one or more microorganisms as a retentate on the microsieve, and wherein the method results in collecting unbound micro-organisms as a retentate.

In still another aspect, the invention provides a method of providing a filter holder having a substantially circular cross section with a filter having a substantially rectangular, particularly square, cross section, for use in the above filter device, the method comprising providing a tube having a circular cross-section, and adhering the filter from the outside to an open end of said tube.

### Description of the Drawings

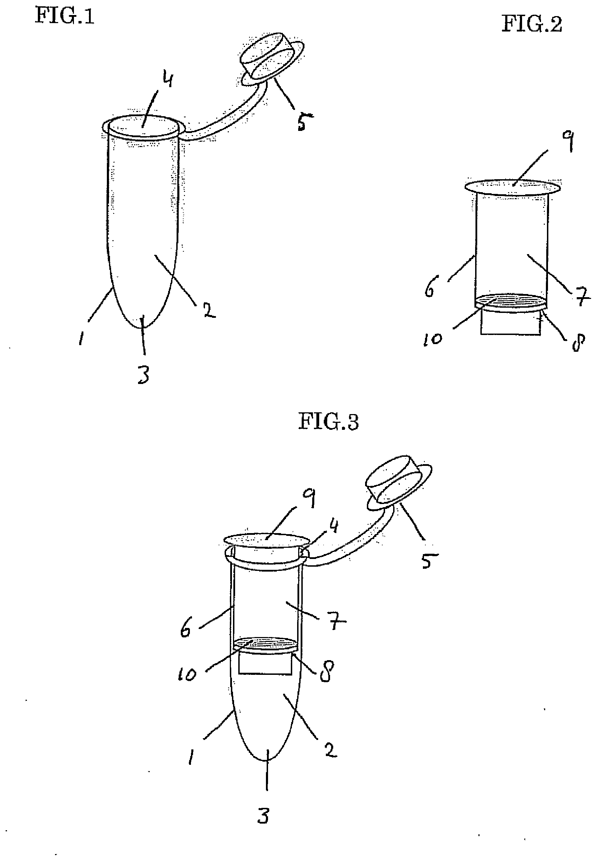

The Figures depict the various elements of an example device according to the invention; in FIG.1 a centrifuge (collection) tube (1) is shown comprising a first hollow column (2), having one closed end (3) and one open end (4), the open end optionally provided with temporary closing means (5); in FIG.2 a filter holder (6) is shown comprising a second hollow column (7), of such a size and shape as to fit on the inside of the first hollow column. The filter holder has a bottom (8) and a top (9), with the bottom being provided with a microsieve (10); in FIG.3 it is shown how the filter holder fits in the collection tube.

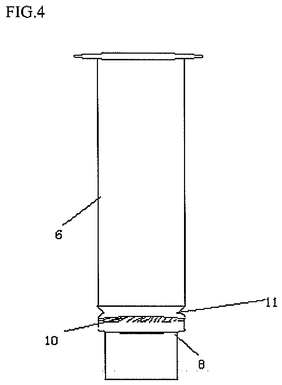

FIG.4 depicts an embodiment in which the filter holder (6) is provided with a score (11) just above the microsieve (10), i.e. at the side facing away from the bottom (8).

### Detailed Description of the Invention

In a general sense, the invention is based on the insight to change the concept of a filter holder with a microcentrifuge tube as a collection tube, such as an *Eppendorf* tube, by placing a lithographically etched ceramic microfilter (microsieve) inside the filter holder instead of an agent-binding filter. This results, *inter alia*, in the ability to concentrate unbound micro-organisms as a retentate.

Particularly, the invention therewith provides a synergistic combination between the functionalities of a spintube and that of a lithographically etched ceramic microfiltration membrane. By the nature of said membrane, a spintube is thus provided that can be readily used as such, or can be used with a modified membrane surface, in all instances where filtration is carried out by centrifugation, and where the interest particularly is in the retentate. Existing membrane filters for use in centrifuge tubes are either provided with specific binding functionalities (and thus no longer suitable for versatile use), or they have no such binding functionality and cannot be easily changed into a membrane having a desired binding functionality. The nature of the surface of a lithographically etched ceramic microfiltration membrane as used in the invention (substantially inert and highly smooth), allows all possible modifications, but it particularly allows obtaining a retentate without such specific binding. The substantially inert nature of the surface means that it will not normally bind to any substances present on it, but insignificant binding of small amounts (less than 1 wt.%, more likely less than 1 wt %o, and preferably less than 10 ppm).

After obtaining the retentate, the invention has the advantage that the lithographically etched ceramic microfiltration membrane makes it possible to visualize the surface of the membrane and the retentate thereon, using an optical detection device, as the highly smooth surface of the membrane means that the focus of the optical device over the entire surface is directly related to the membrane plane directions and can therefore be accurately adjusted. Optical devices are, for example, a microscope, a CCD camera, a scanner, a combination of the aforementioned devices, and the like.

The terms "microsieve" and "microfilter" are used herein interchangeably, and indicate a a lithographically etched ceramic microfiltration membrane. Preferably, the microsieve has pores of a size of 0.1 to 10µm, more preferably 0.2 to 1µm, so as to optimize the retention (or, put otherwise, minimize the number of micro-organisms that passes through).

An advantage of the microsieves mentioned above not only is the small pore size, but also the high pore size uniformity, and well defined pores. Father, the definition of pores by photolithography followed by anisotropic etching, allows tailoring the pore size to need, depending on the size of the micro organisms that one wants to retain on the filter. Particularly, the microsieves preferred in the present invention have a relatively low flow resistance, preferably having a membrane thickness smaller than the pore size. Generally, such thin membranes are supported by a macroporous carrier.

It should be noted that the manufacturing of such microsieves in itself is known to the skilled person. Microsieves are generally produced using silicon micromachining. In this respect reference is made to WO 02/43937, WO 95/13860, WO 93/23154, and WO 2005/105276, all hereby incorporated by reference. Preferred mocrosieves as used in the invention are manufacturerd in accordance with the methods described in a book by prof dr. C.J.M. van Rijn; Nano and micro engineered membrane technology (2002); ISBN 90-807317-1-4 ).

Preferably, in the centrifuge tube of the invention, the ceramic material of the lithographically etched ceramic microsieve is selected from the group consisting of silicon, silicon nitride, silicon oxynitride, silicon carbide, silicides, alumina, zirconium oxide, magnesium oxide, chromium oxide, titanium oxide, titanium oxynitride, titanium nitride and yttrium barium copper oxides. Most preferably, the microfiltration membrane is made of silicon nitride.

As to the centrifuge tube itself, this can be any known centrifuge tube that meets the required diameters to hold the filter holder applicable for this particular size centrifuge tube. Different from existing applications of microsieves, such centrifuge tubes are not designed for vacuum filtration, but essentially comprise a collection tube having a closed bottom. The invention, in a preferred embodiment, particularly pertains to microcentrifuge tubes and to filter holders for use therein. These tubes, and the associated filter holders, are particularly characterized by such small dimensions as will allow them to be used in standard laboratory centrifuges. Said tubes have capacities typically ranging from 250 µl to 2.0 ml, preferably having an outer diameter of 10 to 12 mm and an inner diameter of 7 to 11 mm at the opening, preferably having a closing unit attached to close on top of the filter holder, and preferably allowing collection of 0 to 1 ml of filtrate that does not reach the bottom of the filter holder.

The invention further pertains to a filter device suitable for use in a centrifuge tube, preferably a microcentrifuge tube, the filter device comprising a microsieve as substantially described hereinbefore, contained in a filter holder. The filter device of the invention comprises a tubular filter holder, said filter holder containing a lithographically etched ceramic microsieve, said microsieve being placed so as to form a cross-section of the tubular filter holder.

The invention provides a filter holder for placement within a microcentrifuge tube, the filter holder comprising a filter, preferably a lithographically etched ceramic microfilter, said filter defining a boundary between a filtrate side and a retentate side, wherein the filter holder comprises a score at the retentate side. This score (notch or incision), which can be made into the wall of the filter holder by any known extrusion or blowing technique, or by providing a superfacial cut into an already extruded or blown filter holder tube, allows an easy breakage of the filter holder. To this end, the score preferably is made in the entire circumference of the filter holder. It will be understood that the score is sufficiently deep to facilitate breakage, but is sufficiently superfacial to ensure that the wall is still liquid-tight and sufficiently strong to be handled without inadvertent breakage.

The result is that the optical unit of a device, for example the lens of an objective of a microscope, such as a light microscope can be brought close to the retentate, which greatly facilitates focusing and thus optical analysis. Other optical devices include, e.g. fluorescence detectors. The position of the score is preferably as close to the filter as possible, particularly not exceeding the distance between the optical device and the filter.The score is preferably close to the surface of the filter, but preferably not at the same height in order to secure that breakage of the filter is avoided when breaking the filter holder, and to minimize contamination.

Whilst the terms "filtrate side" and "retentate side" define positions during use in filtration, it will be understood that in respect of the aboveidentified top and bottom of the filter holder, the filtrate side is the side of the microsieve facing the bottom, and the retentate side is the side of the microsieve facing the top.

The invention also pertains to a method for the concentration of one or more micro-organisms from a liquid sample containing them. The method comprises introducing the sample in a filter holder as described above, placing said filter holder into a centrifuge tube, preferably a microcentrifuge tube, and subjecting the centrifuge tube to centrifugal force so as to retain the one or more microorganisms as a retentate on the filter. Herein the filter comprises a microfiltration membrane capable of collecting unbound micro-organisms as a retentate, i.e. a lithographically etched ceramic microsieve as substantially described hereinbefore.

Typical microorganisms and/or other (biological) materials that can be collected using the invention are pathogenic, beneficial and naturally common bacteria, bacterial and fungal spores, (biological) particles, spirochetes, eukaryotic cells, like fungi, protozoae, nematodes, yeast cells ; preferably derived from food or food products, pharmaceuticals, chemicals, body fluids or body tissues, either mammalian or animal-derived, water, feed or feed products, or synthetically manufactured (size-defined) particles. Examples include species, strains and isolates that belong to the genus Escherichia, Salmonella, Shigella, Mycobacterium, Lactobacillus, Lactococcus, Listeria, Leuconostoc, Bacillus, Staphylococcus, Clostridium, Vibrio, Enterococcus, Enterobacter, Yersinia, Legionella, Campylobacter, Micrococcus, Pseudomonas, Flavobacterium, Alcaligenes, Microbacterium, Acinetobacter, Enterobacteriaceae/Coliforms, and Streptococcus, and from the moulds Aspergillus, Neurospora, Geotrichum, Blakeslea, Penicillium, Rhizomucor, Rhizopus and Trichoderma, and from the yeasts Kluyveromyces, Candida, Hansenula, Rhodotorula, Torulopsis, Trichosporon and Saccharomyces).

After centrifuging, all particles of interest are collected / concentrated on top of the microsieve. This presents an important advantage, with a view to further use of the retentate, as compared to existing ways of filtering biologial materials. E.g., the microsieve itself (different from other membranes, that would require a carrier) as a whole can be transported to any analysis or treatment apparatus as desired. Also, as mentioned above, direct analysis by microscope is possible.

The pellet (particles on top of microsieve) can be washed to 'clean' the pellet. At this time several options are available: A) direct analysis of the microsieve surface with pellet, either using a bright field microscope or a fluorescence microscope (if necessary after fluorescent labelling of the target organisms), or a charge-coupled device (CCD) camera, or a µScan device (see e.g. CA2624577 (A1); WO2006059900; ) ; B) subtraction of the organisms for bio-tests (as this requires viable organisms, the invention provides particular advantage here), or C) lysis of the organisms for subsequent DNA/RNA or protein / cell component extraction (which, of course, can also be done with the present invention). However, in the latter case, lysis can be performed on top of the microsieve but after centrifugation, the suspension of interest (with RNA/DNA, proteins or cell components) is collected in the (e.g. eppendorf) collection tube. At this stage further DNA/RNA, protein or cell component purification can be performed using other methods/applications to choice of the user. By virtue of pre-treatment of washing of the pellet collected on top of the microsieve, a more 'clean' or 'pure' concentrate can be obtained. This allows extraction that is less substrate dependent and more 'pure', i.e. less coextraction of subsequent reaction/method inhibiting compounds thus giving more robust and more accurate results in molecular diagnostic tests.

In one aspect, the invention can be used for providing a carrier containing a sample of an analyte, said analyte obtained by centrifuging a liquid comprising the analyte using a spintube that comprises a filter, with the analyte being obtained as a retentate on the filter, wherein the filter comprises a lithographically etched ceramic microsieve. By providing the analyte on this type of microsieve, one retains an easy to handle carrier, on which a retentate (comprising the analyte) is present that is held by the microsieve, without being chemically bound thereto. This is different from other filtration techniques. In the known techniques, an analyte is either bound as a retentate, or obtained as a filtrate. If one wants to subject the analyte to further steps (any chemical or biological steps, irrespective of their purpose), one would normally obtain the analyte as a filtrate. If one wants to obtain the analyte as a retentate, this will normally be in a bound manner, not easily allowing further treatment steps. Thus, the filter device of the invention provides a highly versatile method of obtaining an analyte and still allowing this to be subjected to further treatment as desired. Herewith the filter device of the present invention presents important advantages for direct diagnostics of analytes captured on a lithographically etched ceramic microsieve. If these direct diagnostics comprise optical analysis (such as light microscopy of fluorescence detection), it is preferred to use the above-described easy-to-break filter holder comprising a score, and breaking the filter holder before subjecting the retentate to optical analysis. Before breakage, the filter holder provides a tube in which further treatment steps can be conducted.

In order to be suitable for use in microcentrifuge tubes the microsieve filter is particularly characterized by dimensions commensurate with filter holders as can be used in such tubes. It will be understood that a filter holder for use in a microcentrifuge tube will be of a size sufficiently smaller than that of the tube itself, so as to fit therein. The filter holder typically is made of plastic, preferably polypropylene, polycarbonate, polyvinylchloride, polyoxymethylene, or polymethylmethacrylate. With reference to the dimensions of the filter holder, the microsieve filter of the invention typically has a circular shape, of 6 to 12mm diameter, preferably 8.mm, and a thickness of 0.2 to3mm, preferably 2 mm.

As to the pore sizes in the microsieve, these preferably range from 0.1 to10 µm, more preferably from 0.2 to 1 µm The pores can be of any shape, preferably they are circular (round), square, or rectangular. The microsieves being very thin, they typically comprise a macroporous carrier, as mentioned above.

It is noted that lithographically etched ceramic microsieves typically are provided in the form of a rectangle or square, whilst centrifuge tubes and filter holders for use therein, typically have circular cross-sections. The invention therewith can involve the challenge of fitting a rectangular, or square filter in a circular filter holder. In this respect, the invention in one embodiment provides a method of providing a filter holder having a substantially circular cross section with a filter having a substantially rectangular, particularly square, cross section, the method comprising providing a tube having a circular cross-section, and adhering the filter from the outside to an open end of said tube.

The invention is further illustrated with reference to the following, nonlimiting examples.

### General Example

In the examples, use is made of a microcentrifuge tube ("spintube") containing a silicon nitride microfilter (or "microsieve"), provided with lithographically etched round pores of 0.45 µm diameter, on a macroporous carrier. The microsieve is held by a filter holder, which in turn is held in a centrifuge tube of the *Eppendorf* type ("eppendorf tube").

### Example 1

The quality of a gfp-transformed E.coli culture was determined after enrichment. A part of the culture was applied inside the spintube on top op the microsieve. The eppendorf tube holding the spintube was centrifuged for 30 seconds at 5000 rpm to collect all cells on top of the microsieve. After washing steps the collected cells were directly visualized and quantified using a µScan device, which allowed the separate visualization and thus detection of each individual E.coli cell on top of the microsieve.

### Example 2

To determine if the collected cells were applicable for further biological tests, gfp-transformed E.coli cells were first concentrated using the spintube, washed and then resuspended on top of the microfilter. The suspension was removed from the microfilter and tested on solid growth media to recover the cells.

### Example 3

The collection of a complex microflora suspension in a background solution and subsequent viability analysis was determined. A quantity of 1 ml of a 1 to 100 times diluted suspension was added to the spintube of present invention and subsequently centrifuged, washed with pH-stable buffer and incubated with a viability stain for 10 minutes. A surface scan of the microsieve using the µScan device resulted in visualization of present viable micro-organisms, i.e. yeast and Lactobacillus strains.

### Example 4

For the specific detection of certain micro-organisms in a food background, first the food stuffs need to be homogenized according to AOAC described methodologies. For Salmonella in minced meat this means that 25 g of minced meat is homogenized in 225 ml of buffered peptone water. For these types of organisms a restriction in detection is approved, meaning that no Salmonella is allowed in any food stuffs, i.e. qualitative detection is required. This requires incubation of the homogenized sample at 37°C to allow growth of the micropopulation present. After an appropriate incubation time, an amount of target organisms is obtained and 100µl up to 5 ml is subtracted from the homogenized sample and applied, if necessary in fractions, onto the microfilter in the spintube of the present invention. After centrifuging and washing a bacterial residue remains on top of the microsieve inside the spintube. Next, Salmonella-specific fluorescent antibodies were added on top of the microfilter and incubated at room temperature for several minutes. After a next washing step all unbound Salmonella-specific antibodies were removed and the microfilter was analyzed using the µScan device. Single Salmonella cells were visible and detected.

### Example 5

As to example 3, not only the application of specific fluorescent antibodies was evaluated, but also the general approach of first hybridization with a targetspecific first antibody and the subsequent hybridization of and anti-first antibody antibody two that is fluorescent. Similar results as from example 3 were obtained, being that detection of single bacterial cells was allowed.

### Example 6

In some cases the target micro-organism of interest cannot be discriminated from background microflora by using selective antibodies, or a more detailed detection of a certain micro-organism is required based on presence or absence of certain defined DNA sequence that corresponds to a biomarker or gene typical for this organism or behavior. To allow the specific detection of presence of such DNA sequences, antisense DNA probes were developed that were complementary to the DNA sequence of interest. After collection of the micro-organisms on the microfilter, the organisms were incubated with fluorescent antisense DNA probes according to the FISH principle (fluorescent in situ hybridization). After incubation the unbound DNA probes were removed and cells were evaluated using the µScan device.

### Example 7

DNA was recovered from collected gfp-transformed E. coli cells by applying a lysis buffer onto the microsieve of the spintube of present invention. The bacterial cells were allowed to lyse for few minutes. The lysis buffer was centrifuged through the microsieve in the spintube and replaced from the collection tube into a new tube. Further DNA extraction was performed according to a commercially available DNA extraction kit. The amount and quality of the purified DNA was evaluated by performing real-time PCR directed to a DNA region on the plasmid coding for the gfp-protein (PCR according to reference Klerks et al., Journal of Microbiological Methods (2004) 59:337-349). The starting amount of the DNA was calculated from the amplification plot and compared with DNA extracted from a similar amount of gfp-transformed E.coli cells that were subjected directly to a DNA extraction kit (without pre-treatment using the microsieve spintube). A higher amount of DNA was recovered from the cells that were pre-treated / concentrated using the microsieve containing spintube compared to the traditional approach. The DNA quality appeared similar in this test between both treatments.

### Example 8

The applicability of the microfilter spintube was assessed for quality control of chemically produced luminescent spheres of two pre-determined sizes, being 1 µm and 5 µm in diameter. A small amount of spheres-suspension was applied onto the spintube, washed and tested using the µScan. Different sized spheres were visualized, defining the absence of other spheres different in size than the expected sizes.

## Claims

1. A microcentrifuge tube comprising a filter holder placed inside a collection tube, said filter holder containing a lithographically etched ceramic microsieve, said microsieve being placed so as to form a cross-section of the filter holder, wherein the filter holder comprises a score at the retentate side of said microsieve.

2. A microcentrifuge tube according to claim 1, wherein the score is present in the entire circumference of the filter holder.

3. A microcentrifuge tube according to claim 1 or 2, wherein the ceramic material is selected from the group consisting of silicon, silicon nitride, silicon oxynitride, silicon carbide, silicides, alumina, zirconium oxide, magnesium oxide, chromium oxide, titanium oxide, titanium oxynitride, titanium nitride and yttrium barium copper oxides.

4. A microcentrifuge tube according to any one of the preceding claims, wherein the filter holder is tubular.

5. A method of providing a carrier containing a sample of an analyte, said analyte obtained by centrifuging a liquid comprising the analyte using a microcentrifuge tube according to any one of the preceding claims, with the analyte being obtained as a retentate on the ceramic microsieve.

6. A method according to claim 5, wherein the filter holder, when comprising the retentate, optionally after one or more chemical or biological treatment steps conducted in the filter holder, is subjected to breakage across the score, and the retentate is subjected to optical analysis.

7. A method according to claim 5, the method comprising introducing a liquid sample containing one or more micro-organisms in a microcentrifuge tube according to any one of claims 1 to 4, and subjecting the microcentrifuge tube to centrifugal force so as to concentrate the one or more microorganisms as a retentate on the ceramic microsieve, wherein the method results in collecting unbound micro-organisms as a retentate.

## Patentansprüche

1. Mikrozentrifugenrohr, umfassend einen Filterhalter, der in einem Sammelrohr platziert ist, wobei der Filterhalter ein lithographisch geätztes keramisches Mikrosieb enthält, wobei das Mikrosieb derart platziert ist, dass es einen Querschnitt des Filterhalters bildet, wobei der Filterhalter eine Kerbe an der Retentatseite des Mikrosiebes umfasst.

2. Mikrozentrifugenrohr nach Anspruch 1, wobei die Kerbe über den gesamten Umfang des Filterhalters vorhanden ist.

3. Mikrozentrifugenrohr nach Anspruch 1 oder 2, wobei das keramische Material ausgewählt ist aus der Gruppe bestehend aus Silizium, Siliziumnitrid, Siliziumoxynitrid, Siliziumkarbid, Siliziden, Aluminiumoxid, Zirkoniumoxid, Magnesiumoxid, Chromoxid, Titanoxid, Titanoxynitrid, Titannitrid und Yttriumbariumkupferoxiden.

4. Mikrozentrifugenrohr nach einem der vorstehenden Ansprüche, wobei der Filterhalter rohrförmig ist.

5. Verfahren zum Bereitstellen eines Trägers, enthaltend eine Probe eines Analyten, wobei der Analyt durch Zentrifugieren einer den Analyten umfassenden Flüssigkeit unter Verwendung eines Mikrozentrifugenrohrs nach einem der vorstehenden Ansprüche erhalten wird, wobei der Analyt als ein Retentat auf dem Keramikmikrosieb erhalten wird.

6. Verfahren nach Anspruch 5, wobei der Filterhalter, wenn das Retentat umfassend, optional nach einem oder mehreren chemischen oder biologischen Behandlungsschritten, durchgeführt in dem Filterhalter, einem Bruch über die Kerbe unterzogen wird, und das Retentat einer optischen Analyse unterzogen wird.

7. Verfahren nach Anspruch 5, das Verfahren umfassend Einführen einer flüssigen Probe, enthaltend einen oder mehrere Mikroorganismen, in ein Mikrozentrifugenrohr nach einem der Ansprüche 1 bis 4, und Unterziehen des Mikrozentrifugenrohrs einer Zentrifugalkraft, um den einen oder die mehreren Mikroorganismen als Retentat auf dem Keramikmikrosieb zu konzentrieren, wobei das Verfahren zum Sammeln von ungebundenen Mikroorganismen als Retentat führt.

## Revendications

1. Tube de microcentrifugation comprenant un porte-filtre placé à l'intérieur d'un tube de collecte, ledit porte-filtre contenant un micro-tamis en céramique gravé par lithographie, ledit micro-tamis étant placé de manière à former une section transversale du porte-filtre, dans lequel le porte-filtre comprend une pliure du côté du rétentat dudit micro-tamis.

2. Tube de microcentrifugation selon la revendication 1, dans lequel la pliure est présente sur toute la circonférence du porte-filtre.

3. Tube de microcentrifugation selon la revendication 1 ou 2, dans lequel le matériau de céramique est choisi dans le groupe comprenant silicium, nitrure de silicium, oxynitrure de silicium, carbure de silicium, siliciures, alumine, oxyde de zirconium, oxyde de magnésium, oxyde de chrome, oxyde de titane, oxynitrure de titane, nitrure de titane et des oxydes de cuivre d'yttrium et de baryum.

4. Tube de microcentrifugation selon l'une quelconque des revendications précédentes, dans lequel le porte-filtre est tubulaire.

5. Procédé de fourniture d'un support contenant un échantillon d'un analyte, ledit analyte étant obtenu par centrifugation d'un liquide comprenant l'analyte à l'aide d'un tube de microcentrifugation selon l'une quelconque des revendications précédentes, l'analyte étant obtenu en tant que rétentat sur le micro-tamis en céramique.

6. Procédé selon la revendication 5, dans lequel le porte-filtre, lorsqu'il comprend le rétentat, facultativement après une ou plusieurs étapes de traitement chimique ou biologique menées dans le porte-filtre, est soumis à une rupture à travers la pliure, et le rétentat est soumis à une analyse optique.

7. Procédé selon la revendication 5, le procédé comprenant l'introduction d'un échantillon liquide contenant un ou plusieurs micro-organismes dans un tube de microcentrifugation selon l'une quelconque des revendications 1 à 4, et la soumission du tube de microcentrifugation à une force centrifuge de manière à concentrer les un ou plusieurs micro-organismes en tant que rétentat sur le micro-tamis en céramique, dans lequel le procédé aboutit à la collecte de micro-organismes non liés en tant que rétentat.
